# EUROPEAN PATENT APPLICATION

(11) **EP 1 333 217 A2**
(43) Date of publication of application: **06.08.2003**
(21) Application number: 03250038.1
(22) Date of filing: 06.01.2003
(51) Int. Cl.: F16L 37/084

(54) **Pipe coupling for a corrugated pipe**

(30) Priority: 01.02.2002 GB 0202305
(71) Applicant: Cable Management Products Limited, Crawley, West Sussex, RH10 9YX (GB)
(72) Inventor: Youssefifar, Fatollah, Cheadle, Cheshire SK8 1NT (GB)
(74) Representative: Flint, Jonathan McNeill

(57) **Abstract**

A coupling 2 for the end 11 of a corrugated pipe 1 has two catches 27 and 28 integrally moulded with the housing 20 of the coupling. The catches 27 and 28 are hinged at one end 31 and have a tooth 32 at their other end that engages between the corrugations 10 on the pipe. Two undulating webs 34 and 35 link the other end of the catches 27 and 28 with the housing 20 to provide an additional resilient restoring force acting on the catches.

## Description

This invention relates to pipe couplings of the kind for a corrugated pipe, the coupling including a housing and a catch member mounted at one end with the housing and arranged to provide a resilient inwardly directed locking force at its opposite end to engage between corrugations on the pipe.

Connection to a corrugated pipe or conduit can be made by means of a coupling in which the end of the pipe is inserted, the coupling having a locking member in the form of a resilient catch or tooth that engages between corrugations to prevent the pipe and coupling being pulled apart after assembly. Couplings of this kind are described, for example, in US5094482, US5041256, GB2225550, US5150930 and US4923227 and are sold by Adaptaflex Limited of Coleshill, Birmingham, UK. Because the catch must engage between corrugations to lock the conduit in the coupling, the conduit should be pulled back slightly after insertion to ensure that the catch has fully engaged. If this is not done, there is a risk that the catch might sit on a corrugation in an outward position and not be properly locked. If a coupling is left in this state for some time, the catch may be permanently deformed to lie in the outward position and not provide any significant resilient locking force. This may allow the conduit subsequently to be pulled from the coupling.

It is an object of the present invention to provide an alternative pipe coupling.

According to the present invention there is provided a coupling of the above-specified kind, characterised in that the coupling includes a resilient member extending between the housing and the opposite end of the catch member to provide an additional inwardly-directed restoring force on the catch member.

The catch member and resilient member are preferably formed integrally with the housing and may be moulded together from a plastics material. The resilient member may have an undulating shape. The coupling may include two resilient members extending between the catch member and the housing. The coupling preferably has two catch members on opposite sides of the housing.

A coupling for a conduit according to the present invention, will now be described, by way of example, with reference to the accompanying drawing, in which:
- Figure 1: is a sectional side elevation view of the coupling before assembly;
- Figure 2: is a plan view of the coupling; and
- Figure 3: is an enlarged sectional side elevation view of a part of the coupling.

The conduit 1 is entirely conventional and is of a rigid but bendable plastics material with a circular section and annular corrugations 10 on its external and internal surfaces. The right-hand end 11 of the conduit 1 is cut square.

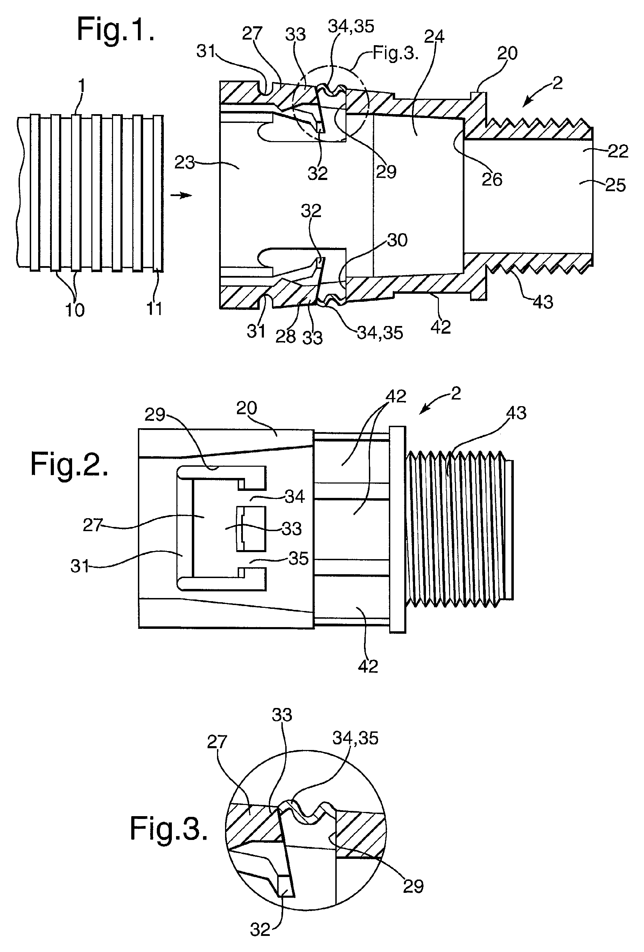

The coupling 2 has a housing 20 similar to previous housings, being a single-piece moulding of a rigid plastics material of substantially tubular shape. The housing 20 has a bore 22 extending axially along its length and divided into three portions, namely an entrance portion 23, an intermediate portion 24 and an exit portion 25. The entrance portion 23 at the left-hand end of the housing 20 has a constant diameter slightly greater than the external diameter of the conduit 1. The intermediate portion 24 tapers along its length from a diameter at one end equal to that of the entrance portion 23 to a diameter at its opposite, right-hand end slightly smaller than the external diameter of the conduit 1. The exit portion 25 has a reduced constant diameter and is separated from the intermediate portion 24 by an internal step 26. Towards its left-hand end, the housing 20 is formed with retaining means in the form of two locking arms or catches 27 and 28 within respective square apertures 29 and 30 in the wall of the housing 20. The left-hand end of each arm 27 and 28 is attached with the housing 20 by a hinge portion 31 of reduced thickness at the left-hand side of the apertures 29 and 30, which enables the arms to be flexed resiliently outwardly and inwardly. Each arm 27 and 28 has an inwardly-extending tooth 32 at its free, right-hand end. The coupling could have any number of one or more locking arms. The natural position of the locking arms 27 and 28 is extending slightly inwardly, as shown in Figures 1 and 3. The opposite end 33 of each arm 27 and 28 is linked with the housing 20 by means of two narrow, thin webs or tabs 34 and 35 spaced from one another across the width of the arms. Viewed in elevation, the tabs 34 and 35 have a wavy, undulating shape so that length of the tabs is greater than the distance they span between the arms 27 and 28 and the edge of the aperture 29 or 30. The tabs 34 and 35 are moulded integrally with the housing 20 and the arms 27 and 28 as a single piece. The shape, thickness and material of the tabs 34 and 35 make them flexible and resilient.

The outside of the housing 20 has flats 42 in the region of the intermediate portion 24 to enable the housing to be gripped by a spanner. The forward, right-hand end of the housing 20 has an external screw thread 43 by which the coupling 2 can be screwed into a cooperating female coupling (not shown). Instead of a screw thread, the housing could have other forms of fixing formation, such as barbs or spring catches.

In use, the coupling 2 is provided as a single component. The user simply pushes the forward end 11 of the conduit 1 into the rear end of the housing 20 so that the arms 27 and 28 flex outwardly slightly as their teeth 32 ride over corrugations 10. As this happens, the tabs 34 and 35 flex outwardly and stretch slightly by flattening their undulations. Rearward movement of the conduit 1 is prevented by the locking arms 27 and 28, which engage the conduit 1 more tightly as a withdrawing force is applied.

If the conduit 1 should be inserted incorrectly so that the teeth 32 on the arms 27 and 28 sit on a corrugation 10 instead of between corrugations, the hinge portion 31 will be stressed by prolonged deformation and may take a set in the outwardly deformed position so that it only applies a reduced force urging the arms inwardly. However, the tabs 34 and 35 also apply an inward force to the free end of the arms 27 and 28, the shape of the tabs making them more flexible than the hinge 31 and less prone to taking a set in the extended position. Thus, if the conduit 1 should be pulled back after a prolonged period of incorrect insertion, the force applied by the tabs 34 and 35 will be sufficient to bring the arms 27 and 28 back in. Their teeth 32 will then lock in a groove between corrugations 10 and retain the conduit 1 securely within the coupling 2. After a period of time in this locking position, the hinge 31 will recover the major part of its initial properties. The tabs 34 and 35 also have the effect of resisting excessive inward force on the retaining arms 27 and 28 of the kind that might be produced if severe tensile force is applied to pull the conduit 1 out of the coupling 2.

The coupling can be a single-piece, integral component, thereby keeping manufacturing costs low and avoiding the risk of lost parts.

## Claims

1. A coupling (2) for a corrugated pipe (1), the coupling including a housing (20) and a catch member (27, 28) mounted at one end (31) with the housing (20) and arranged to provide a resilient inwardly directed locking force at its opposite end (33) to engage between corrugations (10) on the pipe (1), **characterised in that** the coupling (2) includes a resilient member (34, 35) extending between the housing (20) and the opposite end of the catch member (27, 28) to provide an additional inwardly-directed restoring force on the catch member.

2. A coupling according to Claim 1, **characterised in that** the catch member (27, 28) and the resilient member (34, 35) are formed integrally with the housing (20).

3. A coupling according to Claim 2, **characterised in that** the catch member (27, 28), resilient member (34, 35) and the housing (20) are moulded together from a plastics material.

4. A coupling according to any one of the preceding claims, **characterised in that** the resilient member (34, 35) has an undulating shape.

5. A coupling according to any one of the preceding claims, **characterised in that** the coupling includes two resilient members (34 and 35) extending between the catch member (27, 28) and the housing (20).

6. A coupling according to any one of the preceding claims, **characterised in that** the coupling (2) includes two catch members (27 and 28) on opposite sides of the housing (20).
